# NEW EUROPEAN PATENT SPECIFICATION

(11) **EP 0 565 573 B2**
(45) Date of publication and mention of the opposition decision: **03.02.1999**
(45) Mention of the grant of the patent: 22.11.1995
(21) Application number: 92902185.5
(22) Date of filing: 08.01.1992
(51) Int. Cl.: F16H 48/10, F16H 48/20

(54) **DIFFERENTIAL UNIT**
DIFFERENTIALGETRIEBE
DIFFERENTIEL

(30) Priority: 09.01.1991 GB 9100382
(43) Date of publication of application: 20.10.1993
(73) Proprietor: GROUP LOTUS LIMITED, Norwich Norfolk NR14 8EZ (GB)
(72) Inventor: MACE, Graham Henry, Basildon, Essex (GB); THOMPSON, Andrew Charles, Attleborough, Norfolk NR17 2HG (GB)
(74) Representative: Mayes, Stuart David
(86) International application number: GB9200035
(87) International publication number: WO9212361

(56) References cited:
- EP-A- 0 130 806
- EP-A- 0 347 165
- DE-C- 811 650
- GB-A- 2 229 502

## Description

The invention relates to a differential unit.

Differential units are commonly employed in road vehicles to divide the drive from the engine between road wheels on opposed sides of the vehicle. In four-wheel drive vehicles, differential units are employed to divide engine drive between the front and rear wheels and a differential unit may be arranged to divide the incoming torque unequally. The unit may be further arranged to impose a degree of slip limitation.

In the applicants' previous European patent application (which was published as EP-A-O 347 165 and which has the features of the preamble of claim 1) a differential unit was described which divided incoming torque unequally between two output gears. Three embodiments of differential units were disclosed. All three embodiments use two pluralities of intermediate gears housed to freely rotate within a housing. Input torque is imparted to the housing causing the housing to rotate about an axis coincident with the axis of rotation of the two output gears. The rotation of the housing causes rotation of the two pluralities of intermediate gears, which in turn causes rotation of the output gears. The output gears both have different diameters, therefore a different torque is applied to each. The first plurality of intermediate gears engages with the gear of smaller diameter and the second plurality of intermediate gears engages with the second output gear of greater diameter. Both pluralities of intermediate gears mesh with each other, thereby enabling torque to be transferred from one output gear to the other.

In all of the embodiments of EP-A-O 347 165, the intermediate gears forming the two pluralities are identical to one another. Each intermediate gear meshes along half its length with one of the output gears and along the other half with at least one of the intermediate gears meshing with the other output gear. The axial length of each of the embodiments described in EP-A-0 347 165 must be chosen to accommodate the axial length of both of the output gears as well as the axial length of the portion of each of the intermediate gears which meshes with other intermediate gears. Therefore, the axial length of the housing must be commonly chosen to be greater than one and a half times the length of each intermediate gear.

Only a limited space is available within an automobile. In many applications, the manufacturer will require a differential for a three or four-wheel drive vehicle to be positioned as close a possible to the gearbox of the vehicle. Commonly therefore very little space is available and therefore the differential unit must be as compact as possible.

The applicants have now designed an improved differential unit.

Accordingly, the present invention provides a differential unit comprising: a gear carrier designed for rotation about a first axis; means on said carrier whereby said carrier can be rotated about said first axis; a first output gear of a first diameter and a second output gear of a larger second diameter, each output gear being mounted in the carrier for rotation about the first axis; a first plurality of intermediate gears each journalled in a pocket in the carrier to rotate about one of a first plurality of axes parallel to the first axis, said first plurality of axes being equally spaced from the first axis, and each engaging with the first output gear; and a second plurality of intermediate gears each journalled in a pocket in the carrier to rotate about one of a second plurality of axes parallel to the first axis, said second plurality of axes being equally spaced from the first axis, and each engaging the second output gear; wherein each of the first plurality of intermediate gears engages two of the second plurality of intermediate gears; the intermediate gears and the output gears are all helical and each helical intermediate gear is opposite in hand to the intermediate gears with which it engages and the output gear with which it engages;
all of the first and second pluralities of intermediate gears have the same diameter;
each of the intermediate gears is of a constant diameter along the whole axial length thereof;
the intermediate gears are positioned for rotation within one or more cavities defined between the gear carrier and the two output gears; and
the intermediate gears are not mounted on axles for rotation; characterised in that each of the first plurality of intermediate gears extends over only one of the output gears and each of the second plurality of intermediate gears extends over both of the output gears; and
each of the first plurality of intermediate gears has a first axial length and each of the second plurality of gears has a second axial length greater than said first axial length.

The arrangement of gears of the invention reduces the axial length of the differential unit as compared to previous differential units, which is very important for use of the unit as a differential in an automobile and can facilitate the positioning of the unit within a gearbox casing of the vehicle.

In the invention one of the first plurality of intermediate gears engages along at least one portion thereof both one of the second plurality of intermediate gears and also the first output gear (i.e., the same portion of one of the first intermediate gears simultaneously engages two other gears). This possibility was not considered previously but enables the first plurality of gears to perform the required function with a length less than or equal to the length of the first output gear. At least one of the second plurality of intermediate gears engages the second output gear along one portion thereof and one of the first plurality of gears along a separate portion thereof. It is preferable that the second plurality of gears are longer than the first plurality so that total axial length of engagement between the gears is maximised. Typically each output gear and each of the first intermediate gears will all have the same axial length. Each of the second plurality of intermediate gears would then preferably have an axial length at least twice the axial length of the other gears so that at least one of the second plurality of intermediate gears engages the second output gear along the entire axial length thereof and one of the first plurality of intermediate gears along the entire axial length thereof.

The second axial length is preferably at least twice the first axial length.

In a first preferred embodiment the two output gears abut each other along at least a portion of their opposing faces.

The differential unit is of shortest possible axial length for given gears when the two output gears abut each other.

In a second preferred embodiment the differential unit comprises additionally a spacer member interposed between the opposing faces of the two output gears, said spacer member having a first face in abutment with at least a portion of the first output gear and a second face in abutment with at least a portion of the second output gear.

The inclusion of a spacer member might be desirable to reduce wear on the opposing faces of the two output gears.

Preferably, the hand of each plurality of helical intermediate gears and the hand of each of the helical output gears are such that the axial forces arising from interaction between the output gears and the intermediate gears tend to force the two output gears together.

It is preferable to force the output gears together rather than against the casing since the gears are made of a material superior in terms of wear resistance or a material can be easily chosen for the spacer which limits wear.

Preferably, the opposing faces of the output gears are covered with a material to limit wear of the gear faces.

Preferably each of the second plurality of intermediate gears extends over the whole length of both of the output gears.

With each of the second plurality of intermediate gears extending over the whole length of both of the output gears the maximum area of interengagement of gears is possible for given output gears.

Preferably all of the two pluralities of intermediate gears are hollow. This reduces the mass of the unit as a whole and aids location of the gears during manufacture.

Preferably, the gear carrier comprises a central member which defines at least one cavity therewithin, which cavity extends along the whole length of the carrier in an axial direction, and two end members which are adapted to extend over at least a portion of each end of the cavity or cavities so as to restrain motion in an axial direction of the intermediate gears within the cavity or cavities.

Preferably, one of the end members is integral with the central member and the other end member is a platelike member releasably attached to the central member.

This is the simplest construction of the carrier, cheap to manufacture.

Preferably the means on the carrier whereby said carrier can be rotated about said first axis comprises a ring gear releasably attached to the exterior of the carrier.

The provision of a releasable ring gear enables replacement of the ring gear after wear.

Preferably there is provided sealing means for sealing the cavity or cavities and a lubricant fluid is provided within the cavity or cavities. The lubricant fluid is preferably a viscous fluid. The viscous fluid is preferably an electro-rheological fluid and preferably an activation means is provided for activating the fluid.

In one preferred embodiment the larger second output gear defines an aperture therethrough and drive is taken from the larger second output gear via a hollow shaft member connected thereto, drive being taken from the smaller output gear via a shaft co-axial with the first hollow output shaft, which second output shaft extends through the aperture defined within the second larger output gear to connect with the smaller output gear and which second output shaft is free to rotate within the first hollow output shaft.

The present invention also provides a four-wheel drive automobile comprising a differential unit as above wherein the gear carrier is driven to rotate by an engine and the first output gear is connected to drive one pair of wheels and the second output gear is connected to drive the other pair of wheels.

Preferred embodiments of the present invention will now be described with reference to the accompanying drawings in which;
Figure 1 is an exploded sectional view of a first embodiment of the differential unit;
Figure 2 is an exploded sectional view of the second embodiment of the differential unit.

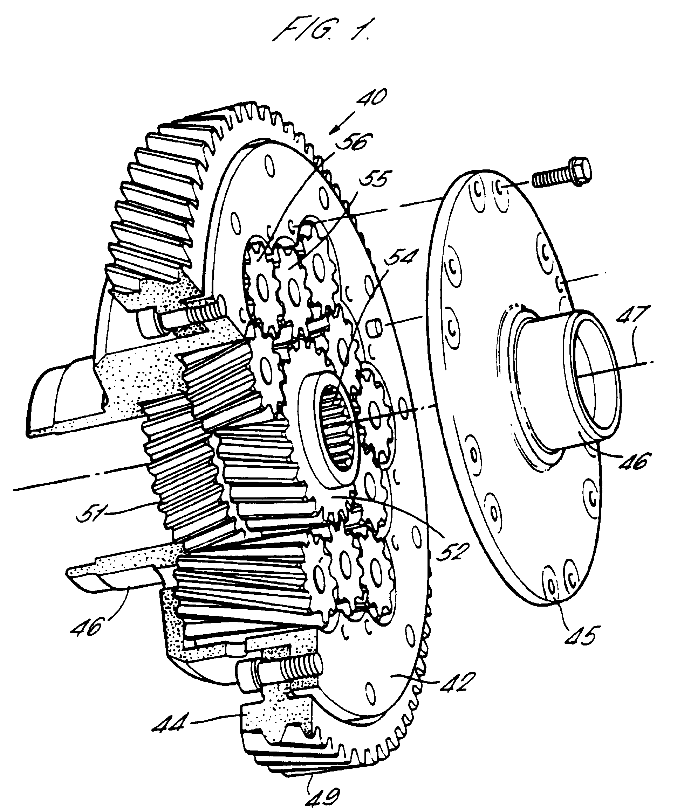

The differential unit 40 of Figure 1 comprises a differential gear carrier in the form of a housing 42 with an integral end plate and an outwardly extending hub 46. An end plate 45 is secured to the housing 42, the end plate 45 comprising another outwardly extending hub 46. The carrier can be rotatably driven about an axis 47 common to the housing 42 and the end plate 45, by means of gear teeth 49 provided on an outer peripheral ring gear 44 secured to the housing 42.

The gear carrier contains within it the left hand end as shown in Figure 1, an output gear 51 having a hub portion, (not shown) around a central aperture extending outwardly into the larger diameter bearing portion 46 of the aperture of the housing 42. The output gear 51 has an internally splined sleeve. At the right hand end, the gear carrier contains an output gear 52 having an internally splined sleeve portion 54.

An inner ring of like intermediate gears 55 are journalled within the housing 42 to rotate about axes parallel to the axis 47. Each of the inner ring of like intermediate gears 55 meshes with the output gear 52 and also two intermediate gears 56 of an outer ring.

The outer ring of like intermediate gears are journalled again within the housing 42. Each of the outer rings of like intermediate gears 56 engages with two of the inner ring of like intermediate gears 55 and also the output gear 51.

Each of the inner ring of like intermediate gears 55 are half the length of each of the outer ring of like intermediate gears 56. The inner ring of intermediate gears 55 extend over only the output gear 54. The outer ring of like intermediate gear 56 extend over the whole length of both of the output gears 51 and 52, each intermediate gear 56 engaging along half of its length with the output gear 51 and along the other half of its length with two of the inner ring of intermediate gears 55.

By the arrangement of the invention, the output gears 51 and 54 can be brought into contact. Therefore the differential unit has the minimum possible length in the axial direction.

In the first embodiment shown in Figure 1 a first output shaft may be connected to the output gear 51, extending perpendicularly therefrom in a direction away from the housing 42. The first output shaft can extend through the aperture defined by the hub 46 integral with the housing 42. The splined teeth are provided within the central sleeve of the output gear 51 to enable engagement of the gear with an output shaft.

The output gear 52 may be connected to a second output shaft extending perpendicularly therefrom in a d irection opposite to the first output shaft. The second output shaft can extend through the aperture defined by the end plate 45 and a hub 46. The splined teeth 54 within the aperture of the gear 52 enable engagement of the gear 52 with an output shaft.

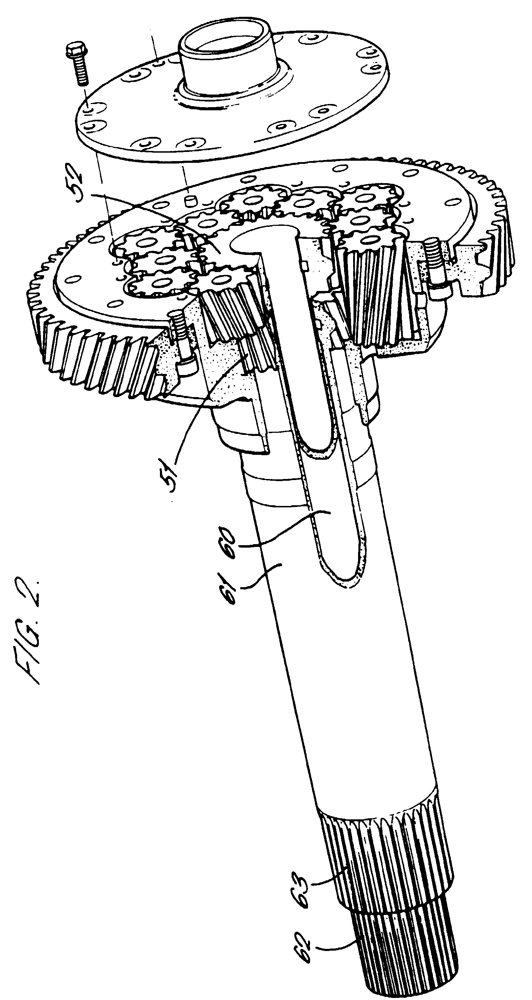

The second embodiment of the differential unit can be seen in Figure 2. The differential unit shown in Figure 2 is essentially the same as the differential unit shown in Figure 1. However, the drive from the output gears is taken in a different manner.

In the differential unit of Figure 2 drive is taken from the two output gears 51 and 52 by two co-axial shafts 60 and 61 which extend from the differential unit in the same direction. Both of the output shafts 60 and 61 are hollow. The hollow output shaft 60 is disposed within the hollow output shaft 61. The output shaft 60 is connected to the output gear 52, whilst the output shaft 61 is connected to the output gear 51. Drive may be taken from the two output shafts 60 and 61 by gearing engaging with the splined ends 62 and 63 of the shafts 60 and 61.

It can be seen from the Figure 2 that the shaft 60 connected to the smaller output gear extends through an aperture defined within the output gear 51.

The second embodiment can be used to use adjacent to a standard gear box or in fact incorporated in the output section of a modified gear box.

Each of the differential units of the preferred embodiments is a limited slip differential. In each embodiment friction forces between the intermediate gears and the housing of the differential unit limit the slip between the output gears.

In the preferred embodiments of the invention the intermediate gears are not in any way rotatably connected to the housing or the end plate of the differential unit. Instead, the intermediate gears are placed in pockets within the housing of the differential unit. The intermediate gears are held in position by interaction between the intermediate gears themselves, between the intermediate gears and the output gears and also between the intermediate gears and the housing. Since the intermediate gears of the preferred embodiments are not mounted on axles for rotation, radial forces on the pinion gears increase the friction between the pinion gears and the housing in which they are journalled. Such radial forces are exerted on the pinion gears during rotation, the forces being proportional to the torque transmitted to the pinion gears. The frictional forces acting between the housing and the pinion gears due to the radial forces act to limit the slip between the output gears. The frictional forces are a function of the radial forces and the speed of the rotation of the gears.

The output gears 51 and 52 of the preferred embodiments of the invention are helical. Each is helical in the opposite hand to the other. The outer ring of intermediate gears 56 are each of opposite hand to the gear 51 and the inner ring of intermediate gears 55 (which are opposite hand to the output gear 52). The hand of each of the gears is chosen so that the axial forces generated by their interengagement tend to force the two output gears 51 and 52 together. Generally, the material used for the gears is superior in its wear resistance to the material of the housing and in this way the loads on the bearings and fixing for the side covers are reduced.

The interaction between the helical gears causes axial loading on the intermediate gears and forces them axially against the casing. The resulting friction helps the limited slip resistance. For a given torque, the frictional forces on helical intermediate gears are proportional to the helical angle, the pressure angle and the coefficient of friction between the gears and the case. These parameters can be varied between differential units to give different limited slip characteristics.

The intermediate gears in the preferred embodiments are hollow. This reduces the mass of the differential unit and eases positioning of the gears during manufacture.

Since the two output gears 51 and 54 abut each other, the abutting surfaces are preferably covered with a material to prevent excessive wear of the gear faces.

Whilst in the preferred embodiments the output gears 51 and 52 abut each other directly, a spacer member such as a thin washer could be included between the opposing faces of the output gears. such a thin spacer would not increase the axial length of the differential unit substantially, but could help to minimise gear wear.

In one preferred use of the differential unit, the differential unit is employed to split drive between the front wheels and the rear wheels of a four-wheel drive vehicle. In many cases it has been found beneficial to deliver more power for one set of wheels rather than the other. By non-uniform distribution of power between the front and rear wheels of a vehicle beneficial driving characteristics can be obtained.

In further preferred embodiments of the differential unit, sealing means are provided to seal off the cavity or cavities defined within the gear carrier. Lubricant fluid is then provided within the cavity or cavities. The lubricant fluid is preferably a viscous fluid, which provides viscous forces acting to resist rotation of the intermediate gears, thereby enhancing the limited slip characteristics.

In one preferred embodiment the viscous fluid used is an electro-rheological fluid. The viscosity of an electro-rheological fluid can be varied by the application of an electric field. In one preferred embodiment an electric field is provided within the differential unit which can be controlled either by a processor or directly by the driver. The limited slop characteristics of the differential unit can be provided to sense the relative rotation of the two output gears and accordingly generate control signals to vary the viscosity of the electro-rheological fluid.

Whilst helical gears are shown in the drawings and described in the embodiments discussed above, other gears such as straight spur gears could be used, although no axial forces would be generated by such gears. Also whilst the intermediate gears of the preferred embodiments are all of the same diameter, different diameters and numbers of teeth could be used, as long as the gears all mesh.

Material for the gears is chosen for strength, durability and wear. Heat treated steels provide satisfactory performance. Coatings are generally avoided in mass manufacture for reasons of cost, but a coating could be used to alter the coefficient of friction between the gears if necessary. For a competition differential a very lightweight design could be achieved using a casing of light alloy, coated for adequate wear characteristics.

The dimensions of the gears used must be chosen to ensure that all mesh correctly and are chosen for optimum life for given packaging constraints and torque capacity.

For a given four wheel vehicle the ratio between the two output gears is selected to compliment the weight distribution of the vehicle, to optimise performance.

The carrier of the differential unit could be comprised of any number of parts and could be many different shapes as long as the gears are held in mesh. The configuration of carrier shown in the figures is chosen since it is cheap and practical. It is cheap since it requires two casing pieces only. It is practical since it allows easy removal and replacement of the external ring gear.

It is evident that those skilled in the art may make numerous modifictions to specific embodiments described above without departing from the present inventive concept It is accordingly intended that the invention should be construed as embracing each and every novel feature and novel combination of features present or possessed by the apparatus herein described and that the foregoing disclosure shall be read as illustrative and not as limiting except to the extent set forth in the claims appended hereto.

## Claims

1. A differential unit comprising:
a gear carrier (42) designed for rotation about a first axis (47);
means (49) on said carrier (42) whereby said carrier (42) can be rotated about said first axis (47);
a first output gear (52) of a first diameter and a second output gear (51) of a larger second diameter, each output gear (51,52) being mounted in the carrier (42) for rotation about the first axis (47);
a first plurality of intermediate gears (55) each journalled in a pocket in the carrier (42) to rotate about one of a first plurality of axes parallel to the first axis (47), said first plurality of axes being equally spaced from the first axis (47), and each engaging the first output gear (52); and
a second plurality of intermediate gears (56) each journalled in a pocket in the carrier (42) to rotate about one of a second plurality of axes parallel to the first axis (47), said second plurality of axes being equally spaced from the first axis (47), and each engaging the second output gear (51); wherein
each of the first plurality of intermediate gears (55) engages two of the second plurality of intermediate gears (56);
the intermediate gears (55, 56) and the output gears (51, 52) are all helical and each helical intermediate gear (55, 56) is opposite in hand to the intermediate gears (55, 56) with which it engages and the output gear (51, 52) with which it engages;
all of the first (55) and second (56) pluralities of intermediate gears have the same diameter;
each of the intermediate gears (55, 56) is of a constant diameter along the whole axial length thereof;
the intermediate gears (55, 56) are positioned for rotation within one or more cavities defined between the gear carrier (42) and the two output gears (51, 52); and
the intermediate gears (55,56) are not mounted on axles for rotation; characterised in that
each of the first plurality of intermediate gears (55) extends over only one of the output gears (51, 52) and each of the second plurality of intermediate gears (56) extends over both of the output gears (51, 52); and
each of the first plurality of intermediate gears (55) has a first axial length and each of the second plurality of gears (56) has a second axial length greater than said first axial length.

2. A differential unit as claimed in claim 1 wherein the second axial length is at least twice the first axial length.

3. A differential unit as claimed in claim 1 or claim 2 wherein the two output gears (51, 52) abut each other along at least a portion of their opposing faces.

4. A differential unit as claimed in any one of the preceding claims comprising additionally a spacer member interposed between the opposing faces of the two output gears (51, 52), said spacer member having a first face in abutment with at least a portion of the first output gear (52) and a second face in abutment with at least a portion of the second output gear (51).

5. A differential unit as claimed in claim 3 or claim 4 wherein the hand of each plurality of helical intermediate gears (55, 56) and the hand of each of the helical output gears (51, 52) are such that the axial forces arising from interaction between the output gears (51, 52) and the intermediate gears (55, 56) tend to force the two output gears (51, 52) together.

6. A differential unit as claimed in any one of claims 3, 4 or 5 wherein the opposing faces of the output gears (51, 52) are covered with a material to limit wear of the gear faces.

7. A differential unit as claimed in any one of the preceding claims wherein each of the second plurality of intermediate gears (56) extends over the whole length of both of the output gears (51, 52).

8. A differential unit as claimed in any one of the preceding claims wherein all of the two pluralities of intermediate gears (55, 56) are hollow.

9. A differential unit as claimed in any one of the preceding claims wherein the gear carrier (42) comprises a central member which defines at least one cavity therewithin, which cavity extends along the whole length of the carrier (42) in an axial direction, and two end members (45, 46) which are adapted to extend over at least a portion of each end of the cavity or cavities so as to restrain motion in an axial direction of the intermediate gears (55, 56) within the cavity or cavities.

10. A differential unit as claimed in claim 9 wherein one of the end members (46) is integral with the central member and the other end member (45) is a platelike member releasably attached to the central member.

11. A differential unit as claimed in claim 9 or claim 10 wherein the means (49) on the carrier (42) whereby said carrier (42) can be rotated about said first axis (47) comprises a ring gear (49) releasably attached to the exterior of the carrier (42).

12. A differential unit as claimed in any one of claims 9, 10 or 11 wherein there is provided a sealing means for sealing the cavity or cavities and wherein a lubricant fluid is provided within the cavity or cavities.

13. A differential unit as claimed in claim 12 wherein the lubricant fluid is a viscous fluid.

14. A differential unit as claimed in claim 13, wherein the viscous fluid is an electro-rheological fluid and an activation means is provided for activating the fluid.

15. A differential unit as claimed in any one of the preceding claims wherein the second larger output gear (51) defines an aperture therethrough and drive is taken from the larger second output gear (51) via a first hollow output shaft (61) connected thereto, drive being taken from the first smaller output gear (52) via a shaft (60) co-axial with and of a smaller diameter than the first hollow output shaft (61), which second output shaft (60) extends through the aperture defined with the second larger output gear (51) to connect with the first smaller output gear (52) and which second output shaft (60) is free to rotate within the first hollow output shaft (61).

16. A four-wheel drive automobile comprising a differential unit (40) as claimed in any one of the preceding claims wherein the gear carrier (42) is driven to rotate by an engine and the first output gear (52) is connected to drive one pair of vehicle wheels and the second output gear (51) is connected to drive the other pair of vehicle wheels.

## Patentansprüche

1. Differentialgetriebe mit einem um eine erste Achse (47) drehbaren Zahnradträger (42);
Mittel (49) an dem Träger (42) für dessen Drehung um die erste Achse (47);
ein erstes Abtriebsrad (52) mit einem ersten Durchmesser und ein zweites Abtriebsrad (51) mit einem größeren zweiten Durchmesser, die beide in dem Träger (42) um die erste Achse (47) drehbar gelagert sind;
einem ersten Satz von Zwischenzahnrädern (55), von denen jedes mit dem ersten Abtriebsrad (52) in Eingriff ist und in einer Tasche des Trägers (42) so gelagert ist, daß es um eine Achse eines ersten Satzes von Achsen drehbar ist, die zur ersten Achse (47) parallel und in gleichen Abständen von der ersten Achse (47) angeordnet sind; und
einem zweiten Satz von Zwischenzahnrädern (56), von denen jedes mit dem zweiten Abtriebsrad (41) in Eingriff ist und in einer Tasche des Trägers (42) so gelagert ist, daß es um eine Achse eines zweiten Satzes von Achsen drehbar ist, die parallel zur ersten Achse (47) und in gleichen Abständen von der ersten Achse (47) angeordnet sind;
wobei jedes Zwischenzahnrad des ersten Satzes von Zwischenzahnrädern (55) mit zwei Zwischenzahnrädern des zweiten Satzes von Zwischenzahnrädern (56) in Eingriff ist; die Zwischenzahnräder (55, 56) und die Abtriebsräder (51, 52) alle schraubenverzahnt sind und jedes schraubenverzahnte Zwischenzahnrad (55, 56) entgegengesetzten Schraubensinn wie jedes mit ihm in Eingriff stehende Zwischenzahnrad (55, 56) und das mit ihm in Eingriff stehende Abtriebsrad (51, 52) hat;
alle Zwischenzahnräder des ersten (55) und zweiten (56) Satzes von Zwischenzahnrädern, den gleichen Durchmesser haben;
jedes der Zwischenzahnräder (55, 56) entlang seiner gesamten axialen Länge den gleichen Durchmesser hat;
die Zwischenzahnräder (55, 56) drehbar in einem oder mehreren Hohlräumen angeordnet sind, die zwischen dem Zahnradträger (42) und den beiden Abtriebsrädern (51, 52) definiert sind; und
die Zwischenzahnräder (55, 56) nicht zur Rotation auf Wellen gelagert sind;
dadurch **gekennzeichnet**, daß jedes Zwischenzahnrad des ersten Satzes von Zwischenzahnrädern (55) sich nur über eines der Abtriebsräder (51, 52) erstreckt und jedes Zwischenzahnrad des zweiten Satzes von Zwischenzahnrädern (56) sich über beide Abtriebsräder (51, 52) erstreckt; und
jedes Zwischenzahnrad des ersten Satzes von Zwischenzahnrädern (55) eine erste axiale Länge und jedes Zwischenzahnrad des zweiten Satzes von Zwischenzahnrädern (56) eine zweite axiale Länge hat, die größer als die erste axiale Länge ist.

2. Differentialgetriebe nach Anspruch 1,
bei dem die zweite axiale Länge mindestens das Doppelte der ersten axialen Länge beträgt.

3. Differentialgetriebe nach Anspruch 1 oder 2,
bei dem die beiden Abtriebsräder (51, 52) über mindestens einen Teil ihrer einander zugewandten Flächen aneinander anliegen.

4. Differentialgetriebe nach einem der vorangehenden Ansprüche, das zusätzlich ein Abstandsglied aufweist, das zwischen den sich gegenüberstehenden Flächen der beiden Abtriebsräder (51, 52) angeordnet ist, wobei das Abstandsglied eine erste Fläche in Anlage an mindestens einem Teil des ersten Abtriebsrades (52) und eine zweite Fläche in Anlage an mindestens einen Teil des zweiten Abtriebsrades (51) hat.

5. Differentialgetriebe nach Anspruch 3 oder 4,
bei dem der Schraubensinn jedes Satzes von schraubenverzahnten Zwischenzahnrädern (55, 56) und der Schraubensinn jedes der schraubenverzahnten Abtriebsräder (51, 52) derart ist, daß die durch die Wechselwirkung zwischen den Abtriebsrädern (51, 52) und den Zwischenzahnrädern (55, 56) entstehenden Axialkräfte die beiden Abtriebsräder (51, 52) gegeneinander drücken.

6. Differentialgetriebe nach einem der Ansprüche 3, 4 oder 5,
bei dem die einander gegenüberstehenden Flächen der Abtriebsräder (51, 52) mit einem den Abrieb an den Zahnradflächen reduzierenden Material bedeckt sind.

7. Differentialgetriebe nach einem der vorangehenden Ansprüche,
bei dem jedes Zwischenzahnrad des zweiten Satzes von Zwischenzahnrädern (56) sich über die gesamte Länge beider Abtriebsräder (51, 52) erstreckt.

8. Differentialgetriebe nach einem der vorangehenden Ansprüche,
bei dem alle Zwischenzahnräder der beiden Sätze von Zwischenzahnrädern (55, 56) hohl sind.

9. Differentialgetriebe nach einem der vorangehenden Ansprüche,
bei dem der Zahnradträger (42) ein Mittelteil aufweist, in welchem mindestens ein Hohlraum definiert ist, der sich über die gesamte Länge des Trägers (42) in Axialrichtung erstreckt, sowie zwei Endteile (45, 46), die sich mindestens über einen Teil jedes Endes des Hohlraums oder der Hohlräume erstrecken können, um eine Bewegung der Zwischenzahnräder (55, 56) in Axialrichtung in dem Hohlraum oder den Hohlräumen zu begrenzen.

10. Differentialgetriebe nach Anspruch 9,
bei dem eines der Endteile (46) mit dem Mittelteil einstükkig ausgebildet ist und das andere Endteil (45) ein plattenförmiges Teil ist, das an dem Mittelteil lösbar befestigt ist.

11. Differentialgetriebe nach Anspruch 9 oder 10,
bei dem die Mittel (49) an dem Träger (42) zum Drehen des Trägers (42) um die erste Achse (47) einen Zahnkranz (49) aufweisen, der lösbar an der Außenseite des Trägers (42) befestigt ist.

12. Differentialgetriebe nach einem der Ansprüche 9, 10 oder 11,
bei dem eine Abdichtung zum Abdichten des Hohlraums oder der Hohlräume vorgesehen ist und in dem Hohlraum oder den Hohlräumen ein Schmiermittel vorzusehen ist.

13. Differentialgetriebe nach Anspruch 12,
bei dem das Schmiermittel ein viskoses Fluid ist.

14. Differentialgetriebe nach Anspruch 13,
bei dem das viskose Fluid ein Elektro-Rheologisches Fluid ist und eine Aktivierungseinrichtung zum Aktivieren des Fluids vorgesehen ist.

15. Differentialgetriebe nach einem der vorangehenden Ansprüche,
bei dem das zweite größere Abtriebsrad (51) eine durch es hindurchgehende Öffnung umschließt und der Abtrieb von dem zweiten größeren Abtriebsrad (51) über eine mit ihm verbundene erste hohle Abtriebswelle (61) abgenommen wird, und der Abtrieb von dem ersten kleineren Abtriebsrad (52) über eine Welle (60) abgenommen wird, die koaxial zur ersten hohlen Abtriebswelle (61) ist und einen kleineren Durchmesser als diese hat, wobei sich die zweite Abtriebswelle (60) durch die von dem zweiten größeren Abtriebsrad (51) umschlossene Öffnung zur Verbindung mit dem ersten kleineren Abtriebsrad (52) erstreckt, und wobei die zweite Abtriebswelle (60) innerhalb der ersten hohlen Abtriebswelle (61) frei drehbar ist.

16. Automobil mit Vierradantrieb mit einem Differentialgetriebe (40) nach einem der vorangehenden Ansprüche, bei dem der Drehantrieb des Zahnradträgers (42) durch einen Motor erfolgt und das erste Abtriebsrad (52) mit einem Fahrzeugräderpaar und das zweite Abtriebsrad (51) mit dem anderen Fahrzeugräderpaar antreibend verbunden ist.

## Revendications

1. Différentiel comprenant :
un support d'engrenages (42) adapté à une rotation autour d'un premier axe (47) ;
un moyen (49) sur ledit support (42) de sorte que ledit support (42) puisse tourner autour dudit premier axe (47) ;
un premier pignon de sortie (52) d'un premier diamètre et un second pignon de sortie (51) d'un second diamètre plus grand, chaque pignon de sortie (51, 52) étant monté dans le support (42) pour rotation autour du premier axe (47);
une première pluralité de pignons intermédiaires (55), chacun tourillonné dans une cavité dans le support (42) pour tourner autour de l'un des axes d'une première pluralité d'axes parallèles au premier axe (47), lesdits axes de ladite première pluralité étant équidistants du premier axe (47), et chaque pignon engageant le premier pignon de sortie (52) ; et
une seconde pluralité de pignons intermédiaires (56), chacun tourillonné dans une cavité dans le support (42) pour tourner autour de l'un des axes d'une seconde pluralité d'axes parallèles au premier axe (47), lesdits axes de ladite seconde pluralité étant équidistants du premier axe (47), et chaque pignon engageant le second pignon de sortie (51) ; dans lequel
chaque pignon de la première pluralité de pignons intermédiaires (55) engage deux pignons de la seconde pluralité de pignons intermédiaires (56) ;
les pignons intermédiaires (55, 56) et les pignons de sortie (51, 52) sont tous hélicoïdaux et chaque pignon intermédiaire hélicoïdal (55, 56) a une denture d'orientation opposée à celle des pignons intermédiaires (55, 56) avec lesquels il s'engage et du pignon de sortie (51, 52) avec lequel il s'engage ;
tous les pignons des première (55) et seconde (56) pluralités de pignons intermédiaires ont le même diamètre ;
chaque pignon des pignons intermédiaires (55, 56) a un diamètre constant sur toute sa longueur axiale ;
les pignons intermédiaires (55, 56) sont positionnés pour une rotation au sein d'une ou plusieurs cavités définies entre le support d'engrenages (42) et les deux pignons de sortie (51, 52) ; et
les pignons intermédiaires (55, 56) ne sont pas montés sur des axes pour rotation ; caractérisé en ce que
chaque pignon de la première pluralité de pignons intermédiaires (55) s'étend sur un seul des pignons de sortie (51, 52) et chaque pignon de la seconde pluralité de pignons intermédiaires (56) s'étend sur les deux pignons de sortie (51, 52) ; et
chaque pignon de la première pluralité de pignons intermédiaires (55) a une première longueur axiale et chaque pignon de la seconde pluralité de pignons (56) a une seconde longueur axiale supérieure à ladite première longueur axiale.

2. Différentiel selon la revendication 1, dans lequel la seconde longueur axiale est au moins deux fois plus grande que la première longueur axiale.

3. Différentiel selon la revendication 1 ou la revendication 2, dans lequel les deux pignons de sortie (51, 52) butent l'un contre l'autre le long d'au moins une portion de leurs faces opposées.

4. Différentiel selon l'une quelconque des revendications précédentes, comprenant en outre un écarteur disposé entre les faces opposées des deux pignons de sortie (51, 52), ledit écarteur comportant une première face butant contre au moins une portion du premier pignon de sortie (52) et une seconde face butant contre au moins une portion du second pignon de sortie (51).

5. Différentiel selon la revendication 3 ou 4, dans lequel la denture de chaque pignon intermédiaire hélicoïdal (55, 56) de la pluralité et la denture de chacun des pignons de sortie hélicoïdaux (51, 52) ont des orientations telles que les forces axiales résultant de l'interaction entre les pignons de sortie (51, 52) et les pignons intermédiaires (55, 56) tendent à solliciter les deux pignons de sortie (51, 52) l'un vers l'autre.

6. Différentiel selon l'une quelconque des revendications 3, 4 ou 5, dans lequel les faces opposées des pignons de sortie (51, 52) sont couvertes d'un matériau pour limiter l'usure des faces des pignons.

7. Différentiel selon l'une quelconque des revendications précédentes, dans lequel chaque pignon de la seconde pluralité de pignons intermédiaires (56) s'étend sur toute la longueur des deux pignons de sortie (51, 52).

8. Différentiel selon l'une quelconque des revendications précédentes, dans lequel tous les pignons des deux pluralités de pignons intermédiaires (55, 56) sont creux.

9. Différentiel selon l'une quelconque des revendications précédentes, dans lequel le support d'engrenages (42) comprend un organe central qui définit au moins une cavité en son sein, laquelle cavité s'étend sur toute la longueur du support (42) dans une direction axiale, et deux organes d'extrémité (45, 46) qui sont adaptés à s'étendre sur au moins une portion de chaque extrémité de la cavité ou des cavités afin de restreindre le déplacement dans une direction axiale des pignons intermédiaires (55, 56) au sein de la cavité ou des cavités.

10. Différentiel selon la revendication 9, dans lequel un des organes d'extrémité (46) est d'un seul tenant avec l'organe central et l'autre organe d'extrémité (45) est un organe sous forme de plaque fixé avec possibilité de libération à l'organe central.

11. Différentiel selon la revendication 9 ou la revendication 10, dans lequel le moyen (49) sur le support (42) de sorte que ledit support (42) puisse tourner autour dudit premier axe (47) comprend une couronne (49) fixée avec possibilité de libération à l'extérieur du support (42).

12. Différentiel selon l'une quelconque des revendications 9, 10 ou 11, dans lequel est prévu un moyen d'étanchéité pour obturer la ou les cavités et dans lequel un fluide lubrifiant est situé au sein de la cavité ou des cavités.

13. Différentiel selon la revendication 12, dans lequel le fluide lubrifiant est un fluide visqueux.

14. Différentiel selon la revendication 13, dans lequel le fluide visqueux est un fluide électro-rhéologique et un moyen d'activation est prévu pour activer le fluide.

15. Différentiel selon l'une quelconque des revendications précédentes, dans lequel le second pignon de sortie plus grand (51) définit une ouverture en son sein et l'entraînement est fourni depuis le second pignon de sortie plus grand (51) via un premier arbre de sortie creux (61) relié à celui-ci, l'entraînement étant fourni depuis le premier pignon de sortie plus petit (52) via un arbre (60) coaxial au premier arbre de sortie creux (61) et de plus petit diamètre que celui-ci, lequel second arbre de sortie (60) s'étend dans l'ouverture définie par le second pignon de sortie plus grand (51) pour se raccorder avec le premier pignon de sortie plus petit (52) et lequel second arbre de sortie (60) est libre de tourner au sein du premier arbre de sortie creux (61).

16. Automobile à quatre roues motrices comprenant un différentiel (40) selon l'une quelconque des revendications précédentes, dans lequel le support d'engrenages (42) est entraîné en rotation par un moteur et le premier pignon de sortie (52) est relié pour entraîner une paire de roues de véhicule et le second pignon de sortie (51) est relié pour entraîner l'autre paire de roues de véhicule.
